# EUROPEAN PATENT SPECIFICATION

(11) **EP 3 588 183 B1**
(45) Date of publication and mention of the grant of the patent: **02.10.2024**
(21) Application number: 18756943.9
(22) Date of filing: 21.02.2018
(51) Int. Cl.: G02F 1/29, G02F 1/133, G02B 6/32, G02B 27/09, G06F 1/16, B32B 38/18, H04M 1/02

(54) **DISPLAY HAVING CURVED AREA, AND ELECTRONIC DEVICE COMPRISING SAME**
ANZEIGE MIT GEKRÜMMTEM BEREICH UND ELEKTRONISCHE VORRICHTUNG DAMIT
DISPOSITIF D'AFFICHAGE AYANT UNE ZONE INCURVÉE, ET DISPOSITIF ÉLECTRONIQUE LE COMPRENANT

(30) Priority: 27.02.2017 KR 20170025615
(43) Date of publication of application: 01.01.2020
(73) Proprietor: Samsung Electronics Co., Ltd., Suwon-si, Gyeonggi-do 16677 (KR)
(72) Inventor: CHOI, Jong-Chul, Suwon-si, Gyeonggi-do 16677 (KR); KIM, Joo-Hyun, Suwon-si, Gyeonggi-do 16677 (KR); PARK, Soo-Hyun, Suwon-si, Gyeonggi-do 16677 (KR); YOO, Min-Woo, Suwon-si, Gyeonggi-do 16677 (KR); YOON, Doo-Sun, Suwon-si, Gyeonggi-do 16677 (KR); CHOI, Seung-Bum, Suwon-si, Gyeonggi-do 16677 (KR)
(74) Representative: Nederlandsch Octrooibureau
(86) International application number: PCT/KR2018/002096
(87) International publication number: WO 2018/155888

(56) References cited:
- EP-A1- 3 079 033
- KR-A- 20140 116 832
- KR-A- 20150 038 449
- KR-A- 20150 042 123
- KR-A- 20150 059 586
- KR-B1- 101 657 136
- KR-B1- 101 706 617
- US-A- 4 969 966
- US-A1- 2016 318 293

## Description

### [Technical Field]

Various embodiments of the present invention relate to displays with a curved display area and electronic devices including the same.

### [Background Art]

Electronic devices may include a display to function as both an input means and a screen output means.

The edge of the display of a recent electronic device may provide a curved display area. A curved window applies as a display of the curved display area, and an inner display with the same curvature may be attached to the inside of the curved window.

EP 3 079 033 A1 describes an electronic device including a window panel having a front area and a curved area extending from the front area, a display panel disposed beneath the window panel, and a fixed part which supports a curved area of the display panel. The display panel includes a front display area, a side display area extending from the front display area so as to be curved, and a wiring area extending from the side display area, and the fixed part supports a curved shape of the side display area or the wiring area.

KR 2015 0042123 A describes A window member for a curved display device comprises: a flat part; and a window body having a curved part. The first curvature radius of the inner surface of the curved part of the window body is different from the second curvature radius of the outer surface of the same.

KR 2015 0038449 A describes a substrate bonding apparatus capable of bonding a concave substrate having a concave surface and a thin substrate having flexibility through an adhesive with good precision.

### [Detailed Description of the Invention]

### [Technical Problem]

It may be difficult to laminate or attach a display with the same curvature as an undercut-shaped curved window to the inside of the window. The curved window and the curved display are assembled with a main body after allowing the undercut areas therebetween to be filled with a separate structure. Such a structure results in tricky assembly, weak curved display area of the display, and lowering in rigidity.

Accordingly, according to various embodiments of the present invention, there are provided an electronic device including a display with curved areas, in which a first curvature of a window is formed to be different from a second curvature of the display, and a filling member fills the space produced by the difference between the first and second curvatures and a method of manufacturing the same.

### [Technical Solution]

According to various embodiments of the present invention, an electronic device comprises a window including a flat area and a curved area bent from the flat area at a first curvature and a display including a first area disposed under at least a portion of the flat area and a second area extending from the first area and bent at a second curvature different from the first curvature under at least a portion of the curved area, wherein a first filling member is included in a first space between the flat area and the first area of the display, and a second filling member is included in a second space between the curved area and the second area.

According to various embodiments of the present invention, a method of manufacturing an electronic device comprises fastening a window including a curved area bent from a flat area at a first curvature to an upper jig and fastening a display including a second area bent from a first area at a second curvature larger than the first curvature to a lower jig, coupling the upper jig and the lower jig together and allowing the window and the display to face each other, and filling a second space between the curved area and the second area with a filling member, filling a first space between the flat area and the first area with the filling member, and then curing the window and the display.

### [Advantageous Effects]

According to various embodiments of the present invention, a display with a second curvature different from a first curvature of a window is applied, and the space between the first and second curvatures is filled with a filling member formed of an optical adhesive member. Thus, there is no need for a separate structure which would otherwise be provided in the space. This may simplify the assembly process of the product, shorten the assembly time, reduce the number of internal structure of the product, and increase the rigidity of the set.

### [Brief Description of Drawings]

FIG. 1 is a block diagram illustrating a network environment including an electronic device according to various embodiments of the present invention;
FIG. 2A is a perspective view illustrating an electronic device including a display with a curved area according to various embodiments of the present invention;
FIG. 2B is a front view illustrating an electronic device including a display with a curved area according to various embodiments of the present invention;
FIG. 2C is an exploded perspective view illustrating a configuration of an electronic device including a display with a curved area according to various embodiments of the present invention;
FIG. 3 is a perspective view illustrating an assembled state of an electronic device including a display with a curved area according to various embodiments of the present invention;
FIG. 4 is a cross-sectional view taken along line A-A' of FIG. 3;
FIG. 5A is an enlarged cross-sectional view of portion A of FIG. 4, which illustrates a state in which first and second areas are filled with filling members formed of the same material and which is not part of the claimed subject-matter;
FIG. 5B is an enlarged cross-sectional view of portion A of FIG. 4, which illustrates a state in which first and second areas are filled with filling members formed of different materials and which is not part of the claimed subject-matter;
FIG. 6 is a view illustrating a process of manufacturing a window and a display among components of an electronic device including a display with a curved area according to various embodiments of the present invention;
FIG. 7 is a flowchart illustrating a method of manufacturing an electronic device including a display with a curved area according to various embodiments of the present invention;
FIG. 8 is a side cross-sectional view illustrating an assembled state of an electronic device including a display with a curved area according to other various embodiments of the present invention;
FIG. 9 is an exploded perspective view illustrating a configuration of an electronic device including a display with a curved area according to other various embodiments of the present invention;
FIG. 10A is a perspective view illustrating an assembled state of a window and a display among components of an electronic device including a display with a curved area according to other various embodiments of the present invention;
FIG. 10B is a cross-sectional view taken along line B-B' of FIG. 10A;
FIG. 11 is a perspective view illustrating a state of an electronic device including a display with a curved area, in which an assembly of a window and a display among components of the electronic device is filled with a resin-type OCR which is then cured according to other various embodiments of the present invention;
FIG. 12(a), (b), and (c) is a view illustrating a process of manufacturing a window and a display among components of an electronic device including a display with a curved area according to other various embodiments of the present invention;
FIG. 13 is a flowchart illustrating a method of manufacturing an electronic device including a display with a curved area according to other various embodiments of the present invention;
FIG. 14 is a side cross-sectional view illustrating an assembled state of an electronic device including a display with a curved area according to other various embodiments of the present invention;
FIG. 15(a), (b), (c), and (d) is a view illustrating a process of manufacturing a window and a display among components of an electronic device including a display with a curved area according to other various embodiments of the present invention;
FIG. 16 is a flowchart illustrating a method of manufacturing an electronic device including a display with a curved area according to other various embodiments of the present invention; and
FIG. 17 is a side cross-sectional view illustrating an assembled state of an electronic device including a display with a curved area according to other various embodiments of the present invention.

### [Mode for Carrying out the Invention]

As used herein, the terms "have," "may have," "include," or "may include" a feature (e.g., a number, function, operation, or a component such as a part) indicate the existence of the feature and do not exclude the existence of other features.

As used herein, the terms "A or B," "at least one of A and/or B," or "one or more of A and/or B" may include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and/or order and are used to distinguish a component from another without limiting the components. For example, a first user device and a second user device may indicate different user devices from each other regardless of the order or importance of the devices. For example, a first component may be denoted a second component, and vice versa without departing from the scope of the present disclosure.

It will be understood that when an element (e.g., a first element) is referred to as being (operatively or communicatively) "coupled with/to," or "connected with/to" another element (e.g., a second element), it can be coupled or connected with/to the other element directly or via a third element. In contrast, it will be understood that when an element (e.g., a first element) is referred to as being "directly coupled with/to" or "directly connected with/to" another element (e.g., a second element), no other element (e.g., a third element) intervenes between the element and the other element.

As used herein, the terms "configured (or set) to" may be interchangeably used with the terms "suitable for," "having the capacity to," "designed to," "adapted to," "made to," or "capable of" depending on circumstances. The term "configured (or set) to" does not essentially mean "specifically designed in hardware to." Rather, the term "configured to" may mean that a device can perform an operation together with another device or parts. For example, the term "processor configured (or set) to perform A, B, and C" may mean a generic-purpose processor (e.g., a CPU or application processor) that may perform the operations by executing one or more software programs stored in a memory device or a dedicated processor (e.g., an embedded processor) for performing the operations.

The terms as used herein are provided merely to describe some embodiments thereof, but not to limit the scope of other embodiments of the present disclosure. It is to be understood that the singular forms "a," "an," and "the" include plural references unless the context clearly dictates otherwise. The terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

For example, examples of the electronic device according to embodiments of the present disclosure may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a MP3 player, a mobile medical device, a camera, or a wearable device. According to various embodiments, the wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad or tattoo), or a body implantable device (e.g., an implantable circuit).

According to some embodiments, the electronic device may be a home appliance. Examples of the home appliance may include at least one of a television, a digital video disk (DVD) player, an audio player, a refrigerator, an air conditioner, a cleaner, an oven, a microwave oven, a washer, a drier, an air cleaner, a set-top box, a home automation control panel, a security control panel, a TV box (e.g., Samsung HomeSync^{™} , Apple TV^{™} , or Google TV^{™}) , a gaming console (Xbox^{™}, PlayStation^{™}), an electronic dictionary, an electronic key, a camcorder, or an electronic picture frame.

According to other embodiments, examples of the electronic device may include at least one of various medical devices (e.g., diverse portable medical measuring devices (a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, automatic teller's machines (ATMs), point of sales (POS) devices, or internet of things (IoT) devices (e.g., a bulb, various sensors, an electric or gas meter, a sprinkler, a fire alarm, a thermostat, a street light, a toaster, fitness equipment, a hot water tank, a heater, or a boiler).

According to some embodiments, examples of the electronic device may at least one of part of a piece of furniture or building/structure, an electronic board, an electronic signature receiving device, a projector, or various measurement devices (e.g., devices for measuring water, electricity, gas, or electromagnetic waves). According to various embodiments, the electronic device may be one or a combination of the above-listed devices. According to some embodiments, the electronic device may be a flexible electronic device. According to an embodiment, the electronic device disclosed herein is not limited to the above-listed devices, and may include new electronic devices depending on the development of technology.

Hereinafter, electronic devices are described with reference to the accompanying drawings, according to various embodiments. As used herein, the term "user" may denote a human or another device (e.g., an artificial intelligent electronic device) using the electronic device.

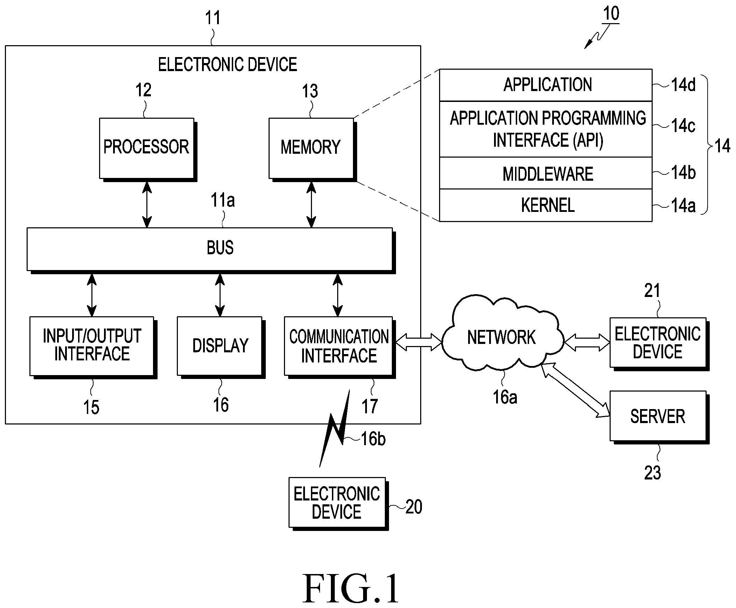

Referring to FIG. 1, according to various embodiments, an electronic device 10 is included in a network environment 11. The electronic device 11 may include a bus 11a, a processor 12, a memory 13, an input/output interface 15, a display 16, and a communication interface 17. In some embodiments, the electronic device 11 may exclude at least one of the components or may add another component. The bus 11a may include a circuit for connecting the components 11 to 17 with one another and transferring communications (e.g., control messages or data) between the components. The processor 12 may include one or more of a central processing unit (CPU), an application processor (AP), or a communication processor (CP). The processor 12 may perform control on at least one of the other components of the electronic device 11, and/or perform an operation or data processing relating to communication.

The memory 13 may include a volatile and/or non-volatile memory. For example, the memory 13 may store commands or data related to at least one other component of the electronic device 11. According to an embodiment, the memory 13 may store software and/or a program 14. The program 14 may include, e.g., a kernel 14a, middleware 14b, an application programming interface (API) 14c, and/or an application program (or "application") 14d. At least a portion of the kernel 14a, middleware 14b, or API 14c may be denoted an operating system (OS). For example, the kernel 14a may control or manage system resources (e.g., the bus 11a, processor 12, or a memory 13) used to perform operations or functions implemented in other programs (e.g., the middleware 14b, API 14c, or application program 14d). The kernel 14a may provide an interface that allows the middleware 14b, the API 14c, or the application 14d to access the individual components of the electronic device 11 to control or manage the system resources.

The middleware 14b may function as a relay to allow the API 14c or the application program 14d to communicate data with the kernel 14a, for example. Further, the middleware 14b may process one or more task requests received from the application program 14d in order of priority. For example, the middleware 14b may assign a priority of using system resources (e.g., bus 11a, processor 12, or memory 13) of the electronic device 11 to at least one of the application programs 14d and process one or more task requests. The API 14c is an interface allowing the application 14d to control functions provided from the kernel 14a or the middleware 14b. For example, the API 14c may include at least one interface or function (e.g., a command) for filing control, window control, image processing or text control. For example, the input/output interface 15 may transfer commands or data input from the user or other external device to other component(s) of the electronic device 11 or may output commands or data received from other component(s) of the electronic device 11 to the user or other external devices.

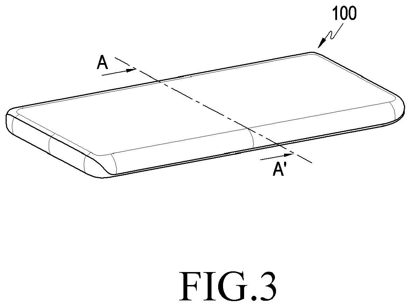

The display 16 may include, e.g., a liquid crystal display (LCD), a light emitting diode (LED) display, an organic light emitting diode (OLED) display, or a microelectromechanical systems (MEMS) display, or an electronic paper display. The display 16 may display, e.g., various contents (e.g., text, images, videos, icons, or symbols) to the user. The display 16 may include a touchscreen and may receive, e.g., a touch, gesture, proximity or hovering input using an electronic pen or a body portion of the user. The display 16 may include a flexible board (103 of FIG. 3) which is described below. The display 16 may include a display driver IC (DDI) to generate signals to drive the display. According to various embodiments, the display driver IC (DDI) may be electrically connected with the display 16.

For example, the communication interface 17 may set up communication between the electronic device 11 and an external electronic device (e.g., a first electronic device 20, a second electronic device 21, or a server 23). For example, the communication interface 17 may be connected with the network 16a through wireless or wired communication to communicate with the external electronic device (e.g., the second external electronic device 21 or server 23).

The wireless communication may include cellular communication which uses at least one of, e.g., long term evolution (LTE), long term evolution-advanced (LTE-A), code division multiple access (CDMA), wideband code division multiple access (WCDMA), universal mobile telecommunication system (UMTS), wireless broadband (WiBro), or global system for mobile communication (GSM). According to an embodiment, the wireless communication may include at least one of, e.g., wireless-fidelity (Wi-Fi), Bluetooth, light-fidelity (Li-Fi), Bluetooth low power (BLE), Zigbee, near-field communication (NFC), magnetic secure transmission (MST), radio frequency (RF), or body area network (BAN) as denoted with denotation 16b of FIG. 1. According to an embodiment of the present invention, the wireless communication may include global navigation satellite system (GNSS). The GNSS may be, e.g., global positioning system (GPS), global navigation satellite system (Glonass), Beidou navigation satellite system (hereinafter, "Beidou") or Galileo, or the European global satellite-based navigation system. Hereinafter, the terms "GPS" and the "GNSS" may be interchangeably used herein. The wired connection may include at least one of, e.g., universal serial bus (USB), high definition multimedia interface (HDMI), recommended standard (RS)-232, power line communication (PLC), or plain old telephone service (POTS). The network 16a may include at least one of telecommunication networks, e.g., a computer network (e.g., local area network (LAN) or wide area network (WAN)), Internet, or a telephone network.

The first and second external electronic devices 20 and 21 each may be a device of the same or a different type from the electronic device 11. According to an embodiment of the present disclosure, all or some of operations executed on the electronic device 11 may be executed on another or multiple other electronic devices (e.g., the electronic devices 20 and 21 or server 23). According to an embodiment of the present disclosure, when the electronic device 11 should perform some function or service automatically or at a request, the electronic device 11, instead of executing the function or service on its own or additionally, may request another device (e.g., electronic devices 20 and 21 or server 23) to perform at least some functions associated therewith. The other electronic device (e.g., electronic devices 20 and 21 or server 23) may execute the requested functions or additional functions and transfer a result of the execution to the electronic device 11. The electronic device 11 may provide a requested function or service by processing the received result as it is or additionally. To that end, a cloud computing, distributed computing, or client-server computing technology may be used, for example.

The electronic device 10 described below may be any one of the above-mentioned wearable device, portable terminal, laptop computer, net book, smartphone, tablet personal computer (PC), GalaxyTAB^{™}, Ipad^{™}, and wireless charger. In the instant embodiment, the electronic device may be a smartphone or portable terminal with a flexible display.

A configuration of an electronic device 100 including a display 120 with a curved area is described below in detail according to various embodiments of the present invention.

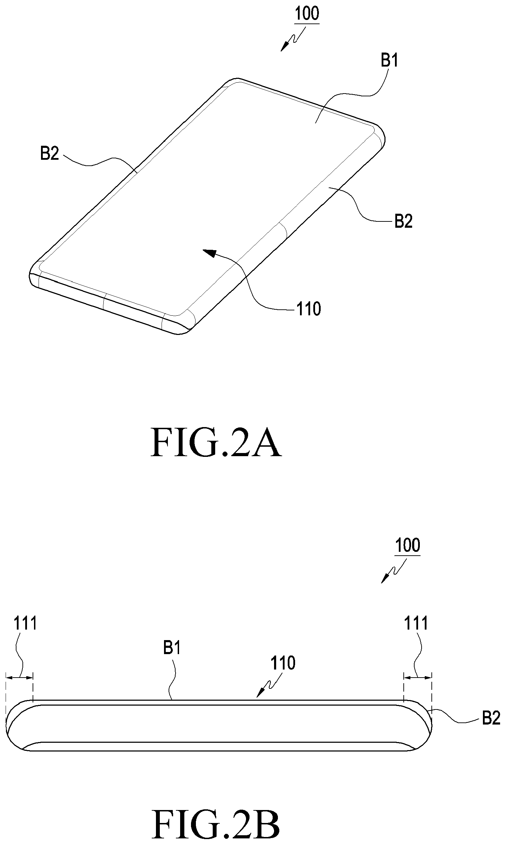

FIG. 2A is a perspective view illustrating an electronic device including a display with a curved area according to various embodiments of the present invention. FIG. 2B is a front view illustrating an electronic device including a display with a curved area according to various embodiments of the present invention.

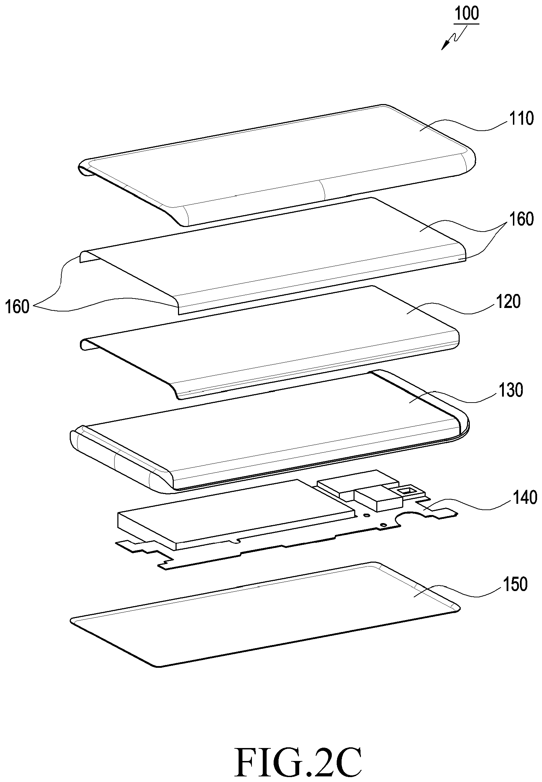

Referring to FIGs. 2A and 2B, according to various embodiments of the present invention, an electronic device 101 (e.g., 11 of FIG. 1) may include, e.g., a flexible display 120. The display (e.g., 120 of FIG. 2C0 may extend to the side surfaces as well as to the front surface thereof. A window 110 to protect the display (e.g., 120 of FIG. 2C) may be implemented in the form of covering the side surfaces B2 as well as the front surface B1 similarly to the display (e.g., 120 of FIG. 2C0. For example, the side surfaces of the display may be expandingly implemented as screen areas, and such screen areas arc formed of curved areas which are in a curved form with curvature. The window 110 may be configured in the form of covering the overall surface, or at least a portion, of the display to protect the display 120. As shown in FIG. 2B, the side surfaces B2 of the window 110 to cover the display (e.g., 120 of FIG. 2C) forms curved areas 111.

FIG. 2C is an exploded perspective view illustrating a configuration of an electronic device according to various embodiments of the present invention.

Referring to FIG. 2C, the electronic device 100 (e.g., 11 of FIG. 1) may include, e.g., a window 110, a display 120, a front case 130, various components 140 (H/W components) provided in the electronic device 100, and a rear case 150. The front case 130 may constitute the outer appearance of the electronic device 100 and may be disposed on the rear surface of the display 120 to fasten and support the display 120. The rear case 150 may be disposed on the rear surface of the front case 130 to constitute the outer appearance of the rear surface of the electronic device 100. various components 140 (H/W components) of the electronic device 100 may be placed in a space between the front case 130 and the rear case 150 to be able to operate the electronic device 100.
various components (H/W components) of the electronic device 100 may include, e.g., a printed circuit board (PCB), a battery, and a USB connector.

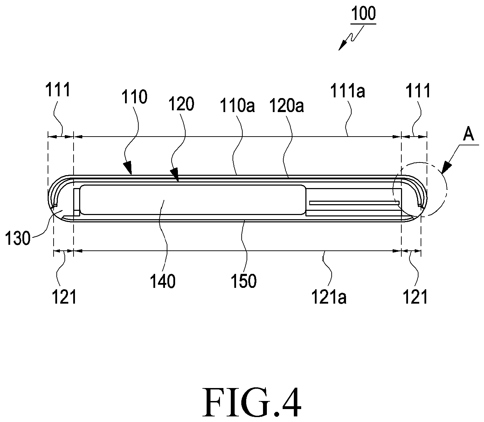

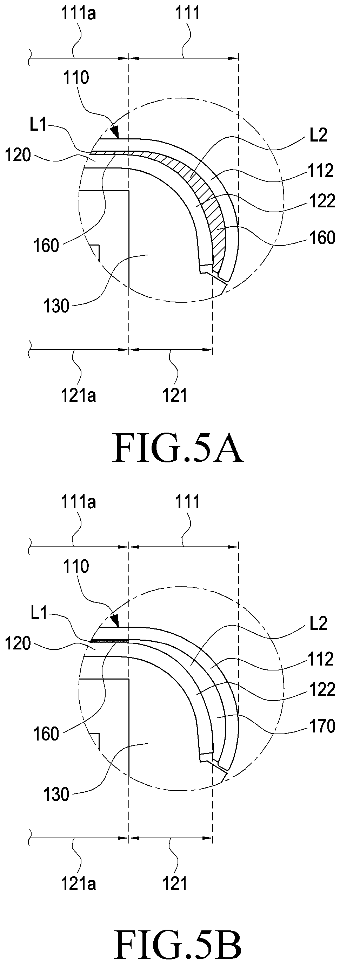

FIG. 3 is a perspective view illustrating an assembled state of an electronic device 100 including a display with a curved area according to various embodiments of the present invention. FIG. 4 is a cross-sectional view taken along line A-A' of FIG. 3. FIGs. 5A and 5B are enlarged cross-sectional views of portion A of FIG. 4.

As shown in FIGs. 3 and 4, the window 110 may be disposed on the front surface of the display 120 to protect the display 120 described below and has curved areas 111 at outer edges. The curved areas 111 are bent at a first curvature from one surface.

The first curvature 112 may be one curvature or may be in a spline shape with two or more curvatures. For example, the spline shape may be in the form of a curvature with one R value or may be in the form of a large curve set formed by connecting two or more curves with different R values.

The display 120 may be formed of a flexible display 120, and the display 120 may be disposed on one surface of the window 110 and on the rear surfaces of the curved areas 111 and to extend up to the internal side surfaces of the window 110. The display 120 includes a first area 121a disposed under at least a portion of the flat area 111a of the window 110 and second areas 121 extending from the first area 121a and bent at a second curvature 122 different from the first curvature 112 under at least a portion of the curved areas 111. For example, the second curvature 122 may be formed to be larger than the first curvature 112. The second curvature 112 may be one curvature or may be in a spline shape with two or more curvatures. For example, the spline shape may be in the form of a curvature with one R value or may be in the form of a large curve set formed by connecting two or more curves with different R values.

FIG. 5A is a view illustrating a state in which the first and second areas are filled with a first filling member and a second filling member formed of the same material.

Referring to FIG. 5A, a first space L1 may be formed between the flat area 111a of the window 110 and the first area 121a of the display 120, and second spaces L2 may be formed between the curved areas 111 and the second areas 121. The first and second spaces L1 and L2 may be filled with one filling member 160. For example, the filling member 160 may attach the display 120 with the second curvature 122 different from the first curvature 112 of the window 110 to the window 110. The filling member 160 formed of an optical clear resin (OCR) fills the first and second spaces L1 and L2 between the window 110 and the display 120 to attach them, simplifying the assembly process of the produce without the need for separate equipment as in the prior art. This may increase rigidity.

According to various embodiments of the present invention, the second spaces L2 between the curved areas 111 of the window 110 and the second areas 121 of the display 120 may be filled with the filling member 60, and the first space L1 between the flat area 111a and the first area 121a may be filled with the filling member 160 already filling the second spaces L2. Thus, the first and second spaces L1 and L2 may be overall filled with one filling member 160.

According to various embodiments of the present invention, when the filling member (OCR) 160 is first injected into the second spaces L2, the filling member (OCR) may be injected at the ends of the second spaces L2 formed on the left/right side surfaces because the second spaces L2 formed on the side surfaces are relatively larger than the first space L1. The filling member (OCR) filling the second spaces L2 may move to, and fill, the first space L1. Thus, the first space L1 and second spaces L2 both may be filled with a single filling member (OCR). The properties (e.g., viscosity) of the filling member (OCR) may be varied and applied depending on the shape and size of the first and second spaces L1 and L2.

According to various embodiments of the present invention, the filling member 160 may contain a resin-type OCR to be able to attach the window 110 and the display 120. In the instant embodiment, the filling member 160 is described as an OCR, but is not limited thereto. In other words, various types of the filling member 160 may be applied as long as they may attach the window 110 and the display 120. For example, the filling member 160 may include any one of film-type optical clear adhesives (OCA), adhesives, double-side tapes, and silicone.

The filling member 160 may include an optical adhesive member formed of a resin-type OCR.

The filling member 160 may support the spaces between the curved areas 111 of the window 110 and the second areas 121 of the display 120.

FIG. 5B is a view illustrating a state in which first and second spaces are filled with a first filling member and a second filling member formed of different materials.

Referring to FIG. 5B, the first space L1 between the flat area 111a of the window 110 and the first area 121a of the display 120 may be filled with a first filling member 160, and the second spaces L2 between the curved areas 111 and the second areas 121 may be filled with second filling members 170. For example, the first and second filling members 160 and 170 may be formed of the same material, e.g., OCR, or may be formed of the OCR and a different material, e.g., OCA, respectively. If the first filling member 160 is formed of an OCR, the second filling members 170 may be formed of a different material, e.g., OCA. In contrast, if the first filling member 160 is formed of an OCA, the second filling members 170 may be formed of a different material, e.g., OCR. The first and second filling members 160 and 170 may be formed of the same or different materials.

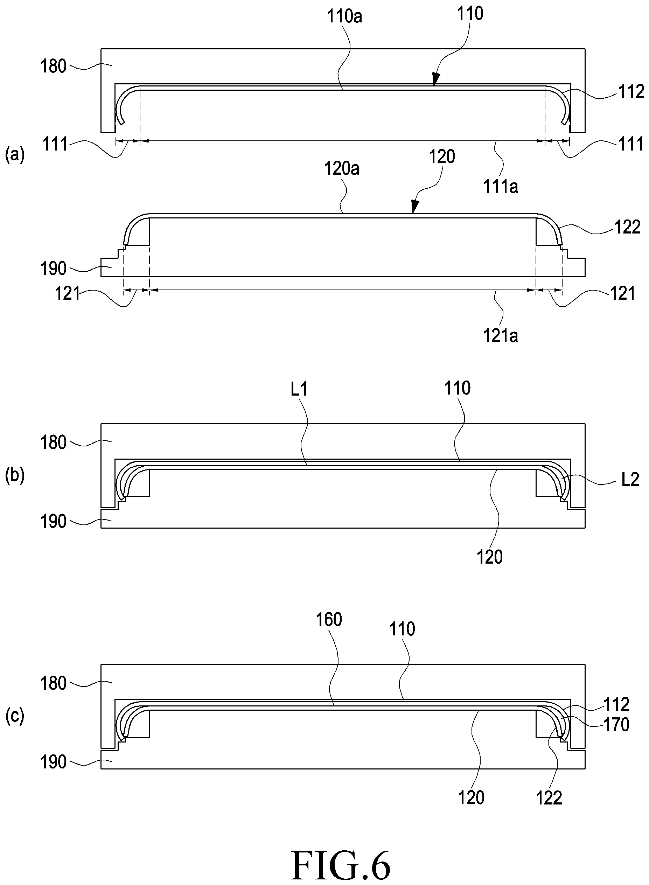

FIG. 6(a), (b), and (c) is a view illustrating a process of manufacturing an electronic device 100 according to various embodiments of the present invention.

Referring to FIG. 6(a), (b), and (c), the window 110 is fixed to an upper jig 180. One surface 110a of the window 110 is a flat area 1 1 1a, and side surfaces of the window 110 include curved areas 111 bent from the flat area 111a at a first curvature 112.

The display 120 is fixed to a lower jig 190. The first area 121a of the display 120 is a flat surface, and side surfaces of the display 120 include second areas 121 bent at a second curvature 122 larger than the first curvature 112 of the window 110.

In this state, the upper and lower jigs 180 and 190 are coupled together. The upper and lower jigs allow one surface 110a of the window 110 to face one surface 120a of the display 120 and side surfaces of the window 110 to face side surfaces of the display 120 while simultaneously forming a first space L1 between the flat area 111a of the window 110 and the first area 121a of the display 120 and second spaces L2 between the curved areas 111 of the window 110 and the second areas 121 of the display 120. For example, the second space L2 may denote a space between the curved area 111 of the window 110 and the second area 121 of the display 120.

In this state, one filling member 160 formed of a resin-type OCR may be injected to fill the second spaces L2 which are relatively broad, and the filling member 160 injected into the second spaces L2 may also fill the first space L1. The filling member 160 so injected into the second spaces L2 may simultaneously fill the first and second spaces L1 and L2. The filling member 160 may be injected into one pair of second spaces L2 formed on the left/right side surfaces of the window 110 and the display 120 or into only one of the two second spaces L2. The so-filled filling member 160 may be hardened to attach the window 110 and the display 120.

Thus, as set forth above in connection with FIG. 4, the window 110 formed of glass may be disposed at one surface and side surfaces of the electronic device 100, and the display 120 with the second curvature 122 of the first curvature 112 of the window 110 may be disposed under the window 110. An optical adhesive layer formed of a resin-type OCR may be positioned between the window 110 and the display 120.

The window 110 and display 120 so prepared may be positioned on the front surface of the front case 130. The rear case 150 may be positioned on the rear surface of the front case 130, and various components 140 of the electronic device 100 may be positioned between the front case 130 and the rear case 150.

Accordingly, assembly of the electronic device 100 including the display 120 with curved areas may be complete.

A method of manufacturing an electronic device 100 including a display 120 with a curved area is described below in detail according to various embodiments of the present invention.

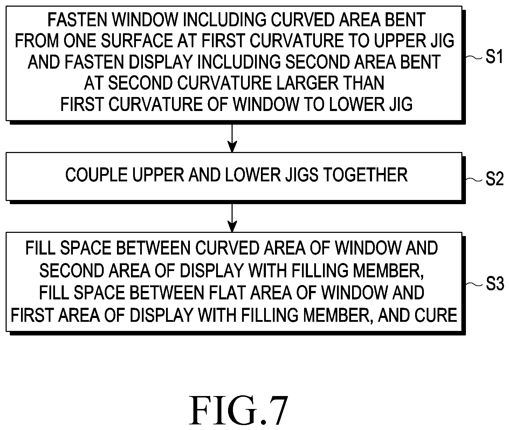

FIG. 7 is a flowchart illustrating a method of manufacturing an electronic device 100 including a display 120 with curved areas according to various embodiments of the present invention.

Referring to FIG. 7, the window 110 with curved areas 111 bent from the flat area 111a at a first curvature 112 is fixed to the upper jig 180, and the display 120 including second areas 121 bent at a second curvature 122 larger than the first curvature 112 of the window 110 may be fixed to the lower jig 190 (S1).

The upper and lower jigs 180 and 190 are coupled together (S2). The upper and lower jigs 180 and 190 allow one surface 110a of the window 110 to face one surface 120a of the display 120 and side surfaces of the window 110 to face side surfaces of the display 120 while simultaneously forming a first space L1 between the flat area 111a of the window 110 and the first area 121 of the display 120 and second spaces L2 between the curved areas 111 of the window 110 and the second areas 121 of the display 120.

In this state, the filling member 160 formed of a resin-type OCR may be injected to fill the second spaces L2 at one time, and the filling member 160 injected into the second spaces L2 may also fill the first space L1. The filling member 160 injected into the second spaces L2 may simultaneously fill the first space L1 as well as the second spaces L2. The filling member 160 may be injected into one pair of second spaces L2 formed on the left/right side surfaces of the window 110 and the display 120 or into only one of the two second spaces L2. After injected into the first and second spaces L1 and L2, the filling member 160 may be cured to attach the window 110 and the display 120 (S3).

For example, after the filling member 160 formed of a resin-type OCR is simultaneously injected to fill the first and second spaces L1 and L2, the window 110 and the display 120 may be attached together. The window 110 and display 120 so prepared may be positioned on the front surface of the front case 130. The rear case 150 may be positioned on the rear surface of the front case 130, and various components 140 of the electronic device 100 may be positioned between the front case 130 and the rear case 150. Therefore, the product is assembled, with the window 110 and the display 120 prepared as a single part. This may simplify the assembly process of the product, shorten the assembly processing time, and reduce the number of internal structures in the product to thereby increase rigidity.

A configuration of an electronic device 200 including a display 220 with a curved area is described below in detail according to other various embodiments of the present invention.

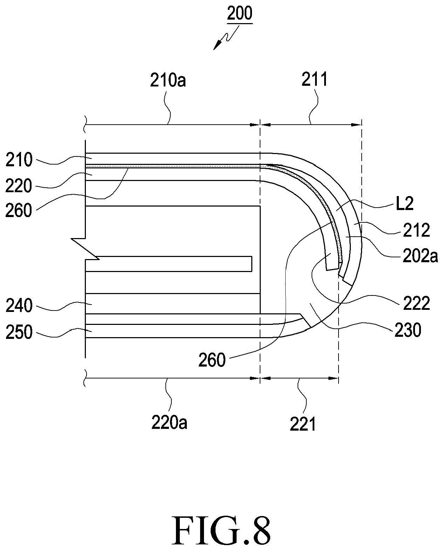

FIG. 8 is a side cross-sectional view illustrating an assembled state of an electronic device 200 according to other various embodiments of the present invention.

Referring to FIG. 8, the electronic device 200 may include, e.g., a window 210, a display 220, a front case 230, various components 240 (H/W components) provided in the electronic device 200, and a rear case 250.

The window 210 may be disposed on the front surface of the display 220 to protect the display 220 described below and has curved areas 211 at outer edges. The curved areas 211 are bent at a first curvature 212 from one surface.

The display 220 may be formed of a flexible display 220, and the display 220 may be disposed on a flat area 210a of the window 210 and on the rear surfaces of the curved areas 211 and to extend up to the internal side surfaces of the window 210. The display 220 includes a first area 220a disposed under at least a portion of the flat area 210a of the window 110 and second areas 221 extending from the first area 220a and bent at a second curvature 222 different from the first curvature 212 under at least a portion of the curved areas. For example, the second curvature 222 may be formed to be larger than the first curvature 212.

various components 240 (H/W components) of the electronic device 200 may be arranged in a space between the front case 230 and the rear case 250. various components (H/W components) of the electronic device 200 may include, e.g., a printed circuit board (PCB), a battery, and a USB connector.

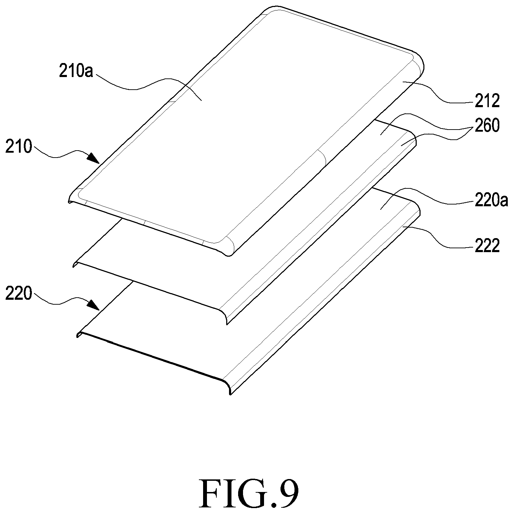

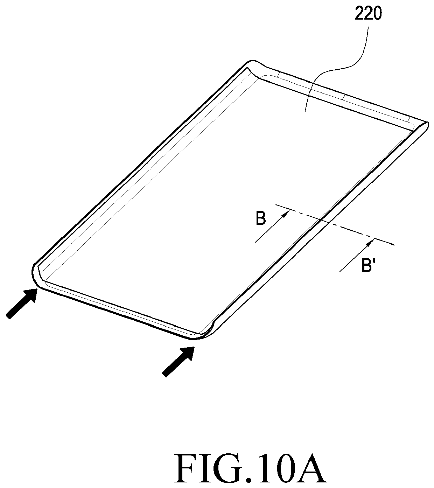

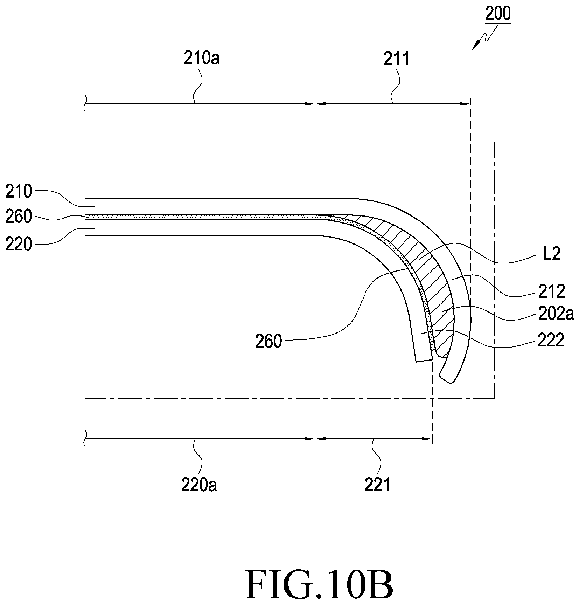

FIG. 9 is an exploded perspective view illustrating a window 210, a display 220, and first and second filling members 260 and 202a among components of an electronic device 200 according to other various embodiments of the present invention. FIG. 10A is a perspective view illustrating an assembled state of a window 210, a display 220, and first and second filling members 260 and 202a among components of an electronic device 200 according to other various embodiments of the present invention. FIG. 10B is a side cross-sectional view illustrating an assembled state of a window 210, a display 220, and first and second filling members 260 and 202a among components of an electronic device 200 according to other various embodiments of the present invention.

Referring to FIGs. 9, 10A, and 10B, a first filling member 260 formed of a film-type OCA may be attached in a first space L1 between a flat area 210a of the window 210 and a first area 220a of the display 220, and a second filling member 260 may be attached in second spaces L2 between curved areas 211 of the window 210 and second areas 221 of the display 220. The first filling member 160 is simultaneously attached in the first and second spaces L1 and L2. Second filling members 202a formed of a resin-type OCR are included in spaces between the first filling member 260 and the curved areas 211 of the window 210.

The first filling member 260 includes a film-type OCA, and the second filling members 202a includes a resin-type OCR.

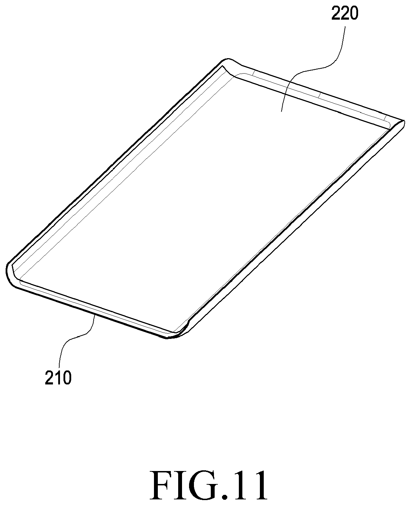

FIG. 11 is a perspective view illustrating a state in which an assembly of a window 210, a display 220, and first and second filling members normal state among components of an electronic device 200 is cured according to other various embodiments of the present invention.

Referring to FIG. 11, the window 210 and the display 220 may be coupled together by the first and second filling members normal state in which state they may be cured to attach the window 210 and the display 220. Thus, the window 210 and the display 220 may be assembled as a single set part.

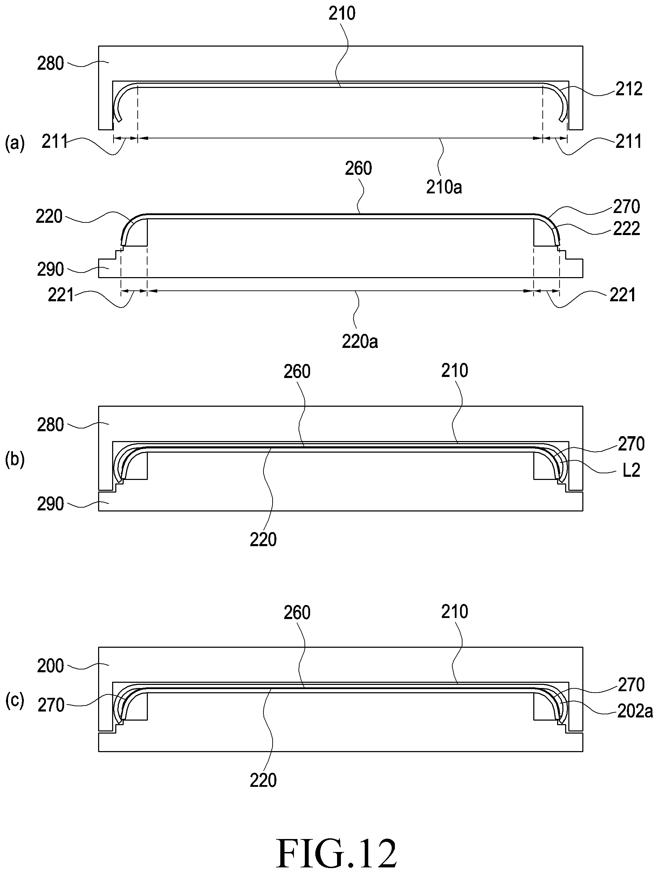

FIG. 12(a), (b), and (c) is a view illustrating a process of manufacturing an electronic device 200 according to other various embodiments of the present invention.

Referring to FIG. 12(a), (b), and (c), the window 210 is fixed to an upper jig 280. A flat area 210a of the window 210 is a flat surface, and side surfaces of the window 210 include curved areas 211 bent from the flat area 210a at a first curvature 212.

The first filling member 260 formed of a film-type OCA may be attached to the first area 220a and second areas 221 of the display 220. The single first filling member 260 may be attached to the flat area 210a of the display 220 and extended and attached to the second areas 221 formed at side surfaces of the display 220.

The display 220 having the first filling member 260 attached thereto may be fixed to the lower jig 290. Side surfaces of the display 220 may include second areas 221 bent at a second curvature 222 larger than the first curvature 212 of the window 210.

In this state, the upper and lower jigs 280 and 290 may be coupled together. The upper and lower jigs 280 and 290 allow the flat area 210a of the window 210 to face the first filling member 260 of the display 220 and the side surfaces of the window 210 to face the first filling member 260 of the display 220 while simultaneously forming the spaces L2 between the sides surfaces of the window 210 and the first filling member 260 of the display 220.

In this state, the window 210 and the display 220 may be firstly attached by the first filling member 260 formed of a film-type OCA. After the window 210 and the display 220 are attached together, the second filling members 202a formed of a resin-type OCR are injected into the spaces L2 and cured, and the window 210 and the display 220 may be secondly attached together.

Upon injecting the second filling members 202a formed of a resin-type OCR into the spaces L2, the second filling members 202a formed of a resin-type OCR may be injected at the ends of the side surfaces of the window 210 and the display 220 because the spaces L2 are relatively broader at the side surfaces of the display 220 and the window 210 than at the one surface. The resin-type OCR of different viscosities may be applied depending on the shape and size of the spaces. For example, the viscosity of the resin-type OCR may be adjusted depending on the shape and size of the spaces.

Thus, the window 210 formed of glass may be disposed at one surface and side surfaces of the electronic device 200, and the display 220 with the second curvature 222 of the first curvature 212 of the window 210 may be disposed under the window 210. An optical adhesive layer formed of a film-type OCA and optical adhesive layers formed of a resin-type OCR may be positioned between the window 210 and the display 220. For example, the first filling member 260 may include an optical adhesive layer formed of a film-type OCA, and the second filling members 202a may include optical adhesive layers formed of a resin-type OCR.

The window 210 and display 220 so prepared may be positioned on the front surface of the front case 230. The rear case 250 may be positioned on the rear surface of the front case 230, and various components 240 of the electronic device 200 may be positioned between the front case 230 and the rear case 250.

Accordingly, assembly of the electronic device 200 including the display 220 with curved areas may be complete.

A method of manufacturing an electronic device 200 including a display 220 with a curved area is described below in detail according to other various embodiments of the present invention.

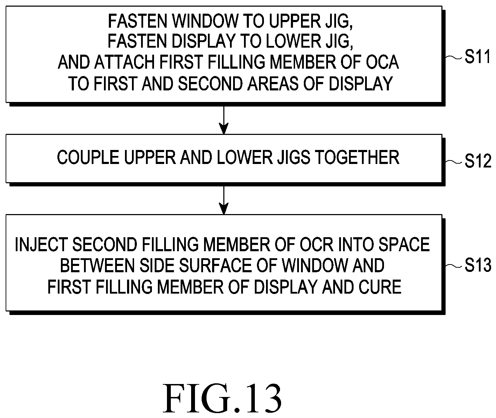

FIG. 13 is a flowchart illustrating a method of manufacturing an electronic device 200 including a display 220 with curved areas according to other various embodiments of the present invention.

Referring to FIG. 13, the window 210 may be fixed to the upper jig 280, the display 220 may be fixed to the lower jig 290, and the first filling member 260 formed of a film-type OCA may be attached to the first areas 220a and the second areas 221 of the display 220 (S11).

In this state, the upper and lower jigs 280 and 290 may be coupled together (S12). The first filling member 260 provided on the first area 220a of the display 220 and the flat area 210a of the window 210 may be rendered to face each other while being simultaneously attached together, and simultaneously when the first filling member 260 of the display 220 and the flat area 210a of the window 210 may be rendered to face each other, the spaces L2 may be formed between the side surfaces of the window 210 and the first filling member 260 of the display 220, and the second filling members 202a formed of a resin-type OCR may be injected into the spaces L2 and cured (S13).

For example, the window 210 and the display 220 may be firstly attached by the first filling member 260 formed of a film-type OCA. After the window 210 and the display 220 are attached together, the second filling members 202a formed of a resin-type OCR are injected into the spaces L2 and cured, and the window 210 and the display 220 may be secondly attached together.

The window 210 and display 220 so prepared may be positioned on the front surface of the front case 230. The rear case 250 may be positioned on the rear surface of the front case 230, and various components 240 of the electronic device 200 may be positioned between the front case 230 and the rear case 250.

A configuration of an electronic device 300 including a display 320 with a curved area is described below in detail according to other various embodiments of the present invention.

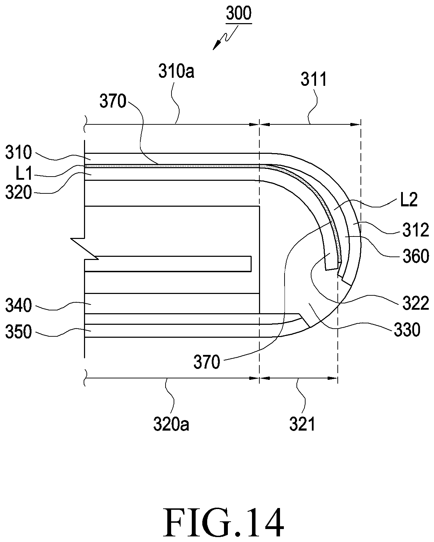

FIG. 14 is a side cross-sectional view illustrating an assembled state of an electronic device 300 according to other various embodiments of the present invention.

Referring to FIG. 14, the electronic device 300 may include, e.g., a window 310, a display 320, a front case 330, various components 340 (H/W components) provided in the electronic device 300, and a rear case 350.

The window 310 may be disposed on the front surface of the display 320 to protect the display 320 described below and may have curved areas 311 at outer edges. The curved areas 211 are bent at a first curvature 312 from one surface.

The display 320 may be formed of a flexible display 320, and the display 320 may be disposed on a flat area 3 10a of the window 310 and on the rear surfaces of the curved areas 311 and to extend up to the internal side surfaces of the window 310. The display 320 may include second areas 321 bent at a second curvature 322 different from the first curvature 312. For example, the second curvature 322 may be formed to be larger than the first curvature 312.

Various components 340 (H/W components) of the electronic device 300 may be arranged in a space between the front case 330 and the rear case 350.

A resin-type first OCR 360 may be included in the second space L2 between the curved area 311 of the window 310 and the second area 321 of the display 320.

A resin-type second OCR 370 may be applied in the first space L1 between the flat area 3 10a of the window 310 and the first area 320a of the display 320. The second OCR 370 may be extended and applied to the second space L2 between the curved area 311 of the window 310 and the second area 321 of the display 320. The second OCR 370 may be applied onto the top surface of the first OCR 360. For example, the single second OCR 370 may be applied to all of the first and second spaces L1 and L2.

According to an embodiment, after the resin-type first OCRs 360 fills and hardens at the side surfaces of the window 310, the second OCR 370 may be applied to the entire window 310 including the first OCRs 360. Then, the display 320 may be assembled, cured, and attached to the window 310.

The resin-type first OCRs 360 fill the second spaces L2 between the curved areas 311 and the second areas 321 and are then cured. Then, the resin-type second OCR 370 is applied onto the entire surface of the window 310 including the first OCRs 360 and then the display 320 may be assembled with the window 310.

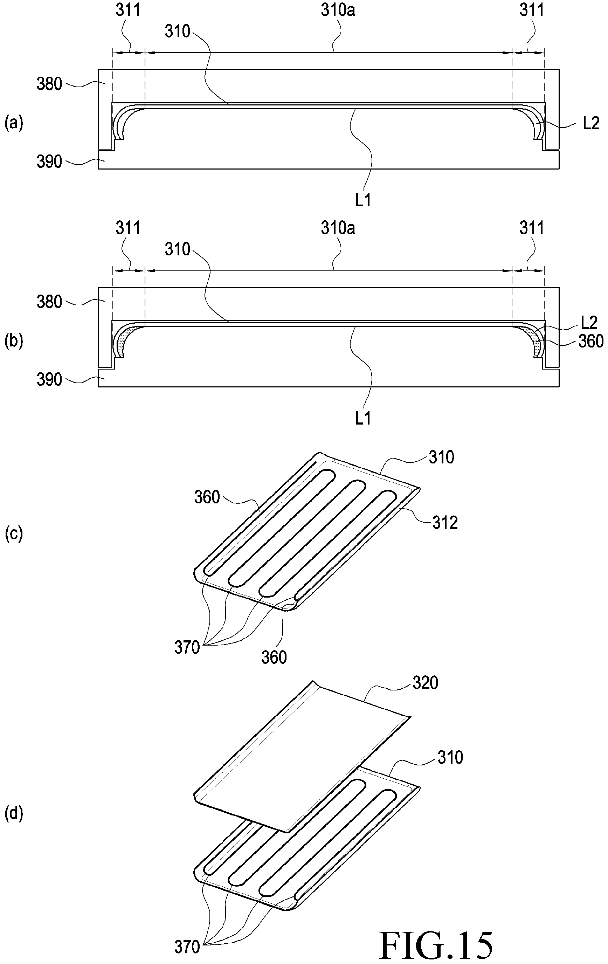

FIG. 15(a), (b), (c), and (d) is a view illustrating a process of manufacturing an electronic device 300 according to other various embodiments of the present invention.

Referring to FIG. 15(a), (b), (c), and (d), the window 310 may be fixed to an upper jig 380 and a lower jig 390. A flat area 310a of the window 310 may be a flat surface, and side surfaces of the window 310 may include curved areas 311 bent from the flat area 310a at a first curvature 312.

In this state, the second spaces L2 formed on the curved areas 311 of the window 310 may be filled with a resin-type first OCR 360 which may then be cured. Then, the window 310 may be removed from the upper and lower jigs 380 and 390.

In this state, as shown in FIG. 15(c), the window 310 including the first OCR 360 may be flipped over, and the second OCR 370 formed of a resin may be applied in a zig-zag shape on the entire flat surface of the window 310 including the first OCR 360. The second OCR 370 may be applied in various shapes, e.g., a zigzag, letter (e.g., XX, YY, and ZZZ), number, symbol, and figure. The second OCR 370 is described as being applied in a zigzag, letter, number, symbol, or figure shape as an example, but is not limited thereto. Various shapes of resin are applicable as long as they may evenly apply to a broad area.

The display 320 may be coupled, cured, and attached to the second OCR 370 applied to the window 310 as shown in FIG. 15(d).

Thus, as set forth above in connection with FIG. 14, the window 310 formed of glass may be disposed at one surface and side surfaces of the electronic device 300, and the display 320 with the second curvature 322 of the first curvature 312 of the window 310 may be disposed under the window 310. First, the resin-type first OCRs 360 may fill the second spaces L2 between the window 310 and the display 320 and be then cured. The resin-type second OCR 370 may be applied to the first OCR 360 and the first space L1 between the window 310 and the display 320. For example, the second OCR 370 may be applied to all of the first OCRs 360 and the first space L1.

The window 310 and display 320 so prepared may be positioned on the front surface of the front case 330. The rear case 350 may be positioned on the rear surface of the front case 330, and various components 340 of the electronic device 300 may be positioned between the front case 330 and the rear case 350.

Accordingly, assembly of the electronic device 300 including the display 320 with curved areas may be complete.

A method of manufacturing an electronic device 300 including a display 320 with a curved area is described below in detail according to other various embodiments of the present invention.

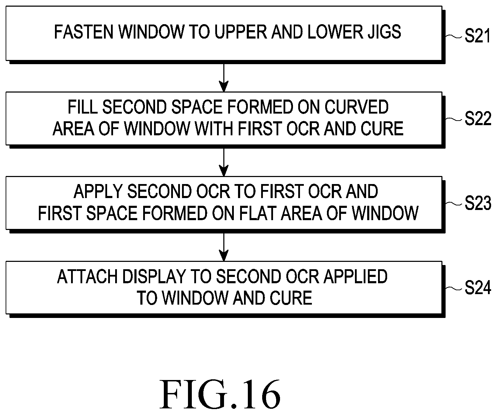

FIG. 16 is a flowchart illustrating a method of manufacturing an electronic device 300 including a display 320 with curved areas according to other various embodiments of the present invention.

Referring to FIG. 16, the window 310 may be fixed to an upper jig 380 and a lower jig 390 (S21). For example, the window 310 may be fastened to the upper and lower jigs 380 and 390. A flat area 310a of the window 310 may be a flat surface, and side surfaces of the window 310 may include curved areas 311 bent from the flat area 310a at a first curvature 312.

The second spaces L2 formed on the curved areas 311 of the window 310 may be filled with a resin-type first OCR 360 which may then be cured (S22).

For example, the second spaces L2 formed on the curved areas 311 of the window 310 may be filled with a resin-type first OCR 360 which may then be cured. Then, the window 310 may be removed from the upper and lower jigs 380 and 390.

In this state, the resin-type second OCR 370 may be applied to all of the first OCRs 360 and the first space L1 formed on the flat area 310a of the window (S23).

For example, the window 310 including the first OCRs 360 may be flipped over, and the resin-type second OCR 370 may be applied to the overall flat area of the window 310 and the first OCRs 360 included at the side surfaces of the window 310. For example, the second OCR 370 may be applied to the entire area of the window.

The display 320 may be coupled, cured, and attached to the second OCR 370 applied to the window 310 (S24).

The window 310 and display 320 so prepared may be positioned on the front surface of the front case 330. The rear case 350 may be positioned on the rear surface of the front case 330, and various components 340 of the electronic device 300 may be positioned between the front case 330 and the rear case 350. Therefore, the product is assembled, with the window 310 and the display 320 prepared as a single part. This may simplify the assembly process of the product, shorten the assembly processing time, and reduce the number of internal structures in the product to thereby increase rigidity.

An electronic device 400 including a display 420 with a curved area is described below in detail according to other various embodiments of the present invention.

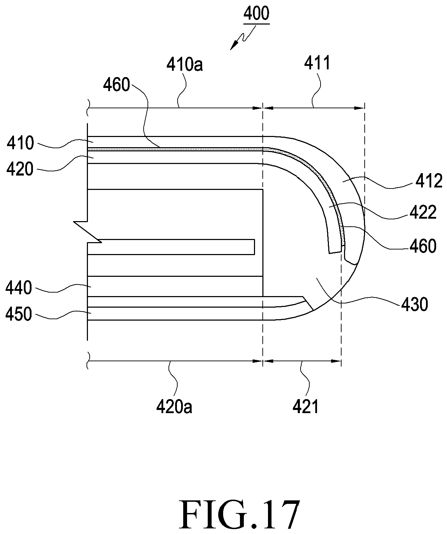

FIG. 17 is a side cross-sectional view illustrating an assembled state of an electronic device 400 including a display 420 with curved areas according to other various embodiments of the present invention.

Referring to FIG. 17, the electronic device 400 may include, e.g., a window 410 formed of glass, a display 420, a front case 430, various components 440 (H/W components) provided in the electronic device 400, and a rear case 450.

The window 410 may include a flat area 410a and curved areas 411 bent from the flat area 410a at a first curvature 412.

The display 420 may include a first area 420a under at least a portion of the flat area 410a and second areas 421 extending from the first area 420a and bent at a second curvature 422. For example, the second curvature 422 may be formed to be larger than the external side of the first curvature 412 and to be the same as the internal side of the first curvature 412.

According to an embodiment, the curved areas 411 of the window 410 may be formed to have a larger thickness than the thickness of the second areas 421 of the display 420 to fill between the curved areas 411 and the second areas 421. For example, formation or treatment may be performed to allow the curved areas 411 of the window 410 to have a different thickness without forming a separate internal space between the curved areas 411 of the window 410 and the second areas 421 of the display 420. Accordingly, by allowing the curved areas 411 of the window 410 to be thicker than the second areas 421 of the display 420, the window 410 may have an outside curvature 411a and an inside curvature 411b formed to be different from each other. For example, the outside curvature 411a of the curved areas 411 of the window 410 may be formed to be smaller than the second curvature 422 of the display 420, and the inside curvature 411b of the curved areas 411 of the window 410 may be formed to be the same or similar to the second curvature 422 of the display 420. The window 410 and the display 420 may be attached together via a film-type OCA.

The window 410 and display 420 so prepared may be positioned on the front surface of the front case 430. The rear case 450 may be positioned on the rear surface of the front case 430. various components 440 of the electronic device 400 may be positioned in a space between the front case 430 and the rear case 450.

## Claims

1. An electronic device (100), comprising:
a window including a flat area (111a) and a curved area (111) bent from the flat area (11 1a) at a first radius of curvature (112);
a display including a first area (121a) disposed under at least a portion of the flat area (111a) and a second area (121) extending from the first area (121a) and bent at a second radius of curvature (122) different from the first radius of curvature (112) under at least a portion of the curved area (111);
a first space (L1) formed between the flat area (111a) and the first area (121a); and
a second space (L2) formed between the curved area (111) and the second area (121);
**characterized in that** a second filling member (202a) is formed to be thicker than a first filling member (260), and
wherein the second space (L2) is formed to be thicker than the first space (L1), and
wherein the first filling member (260) of a film-type optical clear adhesive, OCA, is disposed in the first space (L1) and the second space (L2), and wherein the second filling member (202a) of a resin-type optical clear resin, OCR, is disposed in the second space (L2) between the first filling member (260) of the film-type OCA disposed to the second space (L2) and the curved area (211).

2. The electronic device of claim 1, further comprising an adhesive member to attach the flat area (111a) and the first area (121a).

3. The electronic device of claim 1, wherein the second filling member (170) supports the second space (L2) between the curved area (111) and the second area (121).

4. A method of manufacturing an electronic device (100), the method comprising:
fastening a window (110) including a flat area (111a) and a curved area (111) bent from the flat area (111a) at a first radius of curvature (112) to an upper jig (180) and fastening a display (120) including a first area (121a) and a second area (121) bent from the first area (121a) at a second radius of curvature (122) different from the first radius of curvature (112) to a lower jig (190);
coupling the upper jig (180) and the lower jig (190) together and allowing the window (110) and the display (120) to face each other; and
filling a second space (L2) between the curved area (111) and the second area (121) with a second filling member (170), filling a first space (L1) between the flat area (111a) and the first area (121a) with a first filling member (160), and then curing the window (110) and the display (120),
**characterized in that** the second filling member (170) is formed to be thicker than the first filling member (160),
wherein the second space (L2) is formed to be thicker than the first space (L1),
wherein before coupling the upper and lower jigs (280, 290), the first filling member (260) formed of a film-type optical clear adhesive, OCA, is attached to the first and second areas (220a, 221), wherein the upper and lower jigs (280, 290) are coupled together, the flat area (210a) and the first area (220a) are attached to the first filling member (260) of the film-type OCA, and wherein the second space (L2) is formed between the curved area (211) and the first filling member (260) of the film-type OCA attached to the second area (221), and wherein the second filling member (202a) formed of a resin-type optical clear resin, OCR, is injected into the second space (L2) and is then cured.

## Patentansprüche

1. Elektronische Vorrichtung (100), die Folgendes umfasst:
ein Fenster mit einem flachen Bereich (111a) und einem gekrümmten Bereich (111), der von dem flachen Bereich (111a) mit einem ersten Krümmungsradius (112) abgebogen ist;
ein Display mit einem ersten Bereich (121a), der unter zumindest einem Teil des flachen Bereichs (111a) angeordnet ist, und einem zweiten Bereich (121), der sich von dem ersten Bereich (121a) erstreckt und mit einem zweiten Krümmungsradius (122), der sich von dem ersten Krümmungsradius (112) unterscheidet, unter zumindest einem Teil des gekrümmten Bereichs (111) gebogen ist;
einen ersten Raum (L1), der zwischen dem flachen Bereich (111a) und dem ersten Bereich (121a) gebildet ist; und
einen zweiten Raum (L2), der zwischen dem gekrümmten Bereich (111) und dem zweiten Bereich (121) gebildet ist;
**gekennzeichnet dadurch, dass** ein zweites Füllelement (202a) so gebildet ist, dass es dicker als ein erstes Füllelement (260) ist, und
wobei der zweite Raum (L2) so gebildet ist, dass er dicker als der erste Raum (L1) ist, und
wobei das erste Füllelement (260) aus einem folienartigen optisch klaren Klebstoff, OCA, in dem ersten Raum (L1) und dem zweiten Raum (L2) angeordnet ist, und wobei das zweite Füllelement (202a) aus einem harzartigen optisch klaren Harz, OCR, in dem zweiten Raum (L2) zwischen dem ersten Füllelement (260) aus dem folienartigen OCA, das in dem zweiten Raum (L2) angeordnet ist, und dem gekrümmten Bereich (211) angeordnet ist.

2. Elektronische Vorrichtung nach Anspruch 1, die ferner ein Klebeelement zum Befestigen des flachen Bereichs (111a) und des ersten Bereichs (121a) umfasst.

3. Elektronische Vorrichtung nach Anspruch 1, wobei das zweite Füllelement (170) den zweiten Raum (L2) zwischen dem gekrümmten Bereich (111) und dem zweiten Bereich (121) stützt.

4. Verfahren zum Herstellen einer elektronischen Vorrichtung (100), wobei das Verfahren Folgendes umfasst:
Befestigen eines Fensters (110) mit einem flachen Bereich (111a) und einem gekrümmten Bereich (111), der von dem flachen Bereich (111a) mit einem ersten Krümmungsradius (112) abgebogen ist, an einer oberen Vorrichtung (180) und Befestigen eines Displays (120) mit einem ersten Bereich (121a) und einem zweiten Bereich (121), der von dem ersten Bereich (121a) mit einem zweiten Krümmungsradius (122) abgebogen ist, der sich von dem ersten Krümmungsradius (112) unterscheidet, an einer unteren Vorrichtung (190);
Koppeln der oberen Vorrichtung (180) und der unteren Vorrichtung (190) miteinander und Ermöglichen, dass das Fenster (110) und das Display (120) einander zugewandt sind; und
Füllen eines zweiten Raums (L2) zwischen dem gekrümmten Bereich (111) und dem zweiten Bereich (121) mit einem zweiten Füllelement (170), Füllen eines ersten Raums (L1) zwischen dem flachen Bereich (111a) und dem ersten Bereich (121a) mit einem ersten Füllelement (160) und dann Aushärten des Fensters (110) und des Displays (120),
**gekennzeichnet dadurch, dass** das zweite Füllelement (170) so gebildet ist, dass es dicker als das erste Füllelement (160) ist,
wobei der zweite Raum (L2) so gebildet ist, dass er dicker als der erste Raum (L1) ist,
wobei vor dem Koppeln der oberen und unteren Vorrichtung (280, 290) das erste Füllelement (260), das aus einem folienartigen optisch klaren Klebstoff, OCA, gebildet ist, an dem ersten und zweiten Bereich (220a, 221) befestigt wird, wobei die obere und untere Vorrichtung (280, 290) miteinander gekoppelt sind, der flache Bereich (210a) und der erste Bereich (220a) an dem ersten Füllelement (260) des folienartigen OCA befestigt sind und wobei der zweite Raum (L2) zwischen dem gekrümmten Bereich (211) und dem ersten Füllelement (260) des folienartigen OCA gebildet ist, das an dem zweiten Bereich (221) befestigt ist, und wobei das zweite Füllelement (202a), das aus einem harzartigen optisch klaren Harz, OCR, gebildet ist, in den zweiten Raum (L2) eingespritzt und dann ausgehärtet wird.

## Revendications

1. Dispositif électronique (100), comprenant :
une fenêtre incluant une zone plate (111a) et une zone incurvée (111) pliée à partir de la zone plate (111a) selon un premier rayon de courbure (112) ;
un écran incluant une première zone (121a) disposée sous au moins une portion de la zone plate (111a) et une deuxième zone (121) s'étendant de la première zone (121a) et pliée selon un deuxième rayon de courbure (122) différent du premier rayon de courbure (112) sous au moins une portion de la zone incurvée (111) ;
un premier espace (L1) formé entre la zone plate (111a) et la première zone (121a) ; et
un deuxième espace (L2) formé entre la zone incurvée (111) et la deuxième zone (121) ;
**caractérisé en ce qu'**un deuxième élément de remplissage (202a) est formé pour être plus épais qu'un premier élément de remplissage (260), et
où le deuxième espace (L2) est formé pour être plus épais que le premier espace (L1), et
où le premier élément de remplissage (260) d'un adhésif transparent optique, OCA, de type film est disposé dans le premier espace (L1) et le deuxième espace (L2), et où le deuxième élément de remplissage (202a) d'une résine transparente optique, OCR, de type résine est disposé dans le deuxième espace (L2) entre le premier élément de remplissage (260) de l'OCA de type film disposé dans le deuxième espace (L2) et la zone incurvée (211).

2. Dispositif électronique selon la revendication 1, comprenant en outre un élément adhésif pour fixer la zone plate (111a) et la première zone (121a).

3. Dispositif électronique selon la revendication 1, où le deuxième élément de remplissage (170) supporte le deuxième espace (L2) entre la zone incurvée (111) et la deuxième zone (121).

4. Procédé de fabrication d'un dispositif électronique (100), le procédé comprenant :
fixer une fenêtre (110) incluant une zone plate (111a) et une zone incurvée (111) pliée à partir de la zone plate (111a) selon un premier rayon de courbure (112) à un gabarit supérieur (180) et fixer un écran (120) incluant une première zone (121a) et une deuxième zone (121) pliée à partir de la première zone (121a) selon un deuxième rayon de courbure (122) différent du premier rayon de courbure (112) à un gabarit inférieur (190) ;
accoupler le gabarit supérieur (180) et le gabarit inférieur (190) ensemble et permettre à la fenêtre (110) et à l'écran (120) de se faire mutuellement face ; et
remplir un deuxième espace (L2) entre la zone incurvée (111) et la deuxième zone (121) avec un deuxième élément de remplissage (170), remplir un premier espace (L1) entre la zone plate (111a) et la première zone (121a) avec un premier élément de remplissage (160), puis durcir la fenêtre (110) et l'écran (120),
**caractérisé en ce que** le deuxième élément de remplissage (170) est formé pour être plus épais que le premier élément de remplissage (160),
où le deuxième espace (L2) est formé pour être plus épais que le premier espace (L1),
où avant d'accoupler les gabarits supérieur et inférieur (280, 290), le premier élément de remplissage (260) formé d'un adhésif transparent optique, OCA, de type film est fixé aux première et deuxième zones (220a, 221), où les gabarits supérieur et inférieur (280, 290) sont accouplés ensemble, la zone plate (210a) et la première zone (220a) sont fixées au premier élément de remplissage (260) de l'OCA de type film, et où le deuxième espace (L2) est formé entre la zone incurvée (211) et le premier élément de remplissage (260) de l'OCA de type film fixé à la deuxième zone (221), et où le deuxième élément de remplissage (202a) formé d'une résine transparente optique, OCR, de type résine est injecté dans le deuxième espace (L2) puis est durci.
